# EUROPEAN PATENT APPLICATION

(11) **EP 1 081 530 A1**
(43) Date of publication of application: **07.03.2001**
(21) Application number: 99917270.3
(22) Date of filing: 14.04.1999
(51) Int. Cl.: G02C 7/10, G02C 11/02

(54) **LENSES FOR HOLOGRAPHIC GLASSES AND VARIANTS**

(30) Priority: 21.04.1998 RU 98107417
(71) Applicant: Tasr Limited, Nassau (BS)
(72) Inventor: GULANYAN, Emin Khachikovich, Moscow, 107078 (RU)
(74) Representative: W.P. Thompson & Co.
(86) International application number: RU9900116
(87) International publication number: WO9954779

(57) **Abstract**

The present invention relates to lenses for holographic glasses wherein said lenses comprise a transparent base (1) having its inner surface, facing the user (wearer), provided with a layer (2) of recording material wherein at least one three-dimensional hologram is recorded. Disposed behind the layer (2) (as viewed from the outside of the glasses towards the wearer) is a compensation layer (3) applied to a substrate made of transparent material (4). The compensation layer (3) is made to selectively reflect radiation impinging thereon from a specified spatial angle and having wavelengths within one or more spectral ranges, including those wavelengths at which a relating three-dimensional hologram has maximum diffraction efficiency, and to transmit radiation outside said one or more spectral ranges. In a particular case, the compensation layer (3) is made as a layer of recording material, which is similar to the layer (2), in which layer (3) one or more holograms of mirror(s) is recorded. Said holographic mirrors are made to be reflective in said one or more spectral ranges.

## Description

### TECHNICAL FIELD

The invention relates to optics and more specifically to the structure of lenses for sun glasses, as well as for decorative, advertisement or club-house holographic spectacles (glasses), the effect of which is based on a holographic image, including a coloured one, appearing on illuminating the lenses by a natural or artificial light The invention is aimed at reducing colour contrast over the aperture of the lenses in transmitted light, while extending an angular range in which a holographic image can be observed, extending an angular range of incidence of the light reconstructing a hologram, as well as increasing the brightness of images, reconstructed from holograms of the objects.

### BACKGROUND ART

Holograms of objects with inhomogeneous spatial properties are used in holographic glasses (spectacles) being employed in decorative or advertisement purposes for increasing brightness and expressiveness of a holographic image. This causes a spatial variability in diffraction efficiency of holograms over the aperture of the lenses and in turn results in spatial modulation of the light transmitted through the lenses. Such modulation appears in the form of colour spots creating a discomfort for the user (wearer) and causing weariness and eye fatigue. The problem is complicated still more when multicolour holographic images having sharp changes in colour between different elements of a recorded object are used for the same purposes.

Most of the known types of holographic spectacles fail to provide simultaneously a greater brightness and expressiveness of the image to be formed and a high spatial homogeneity of the light flux transmitted through the lenses, this homogeneity being characterised by a low colour contrast over the aperture of the lenses. This is explained by the fact that in lenses of such spectacles a hologram-carrying layer (hologram layer) often performs the function of attenuating the intensity of transmitted radiation as well as the function of forming the image. A special protective layer when used in the lenses of the known glasses usually performs an additional function - protection of eyes against bright radiation. Due to this reason the protective layer has homogeneous spatial and spectral optical properties and thereby falls to solve the above problem.

Thus, for example lenses for decorative sun glasses are known (USSR patent 1761001, G02C 7/10, 11/02, 07.09.1992, [1]). These lenses comprise an optically transparent base used as a substrate and having its inner surface, facing the user, coated with a partially reflecting, partially transmitting layer of a holographic emulsion, in which at least one three-dimensional hologram is photographically recorded. These lenses also comprise a protective layer (coating of the lacquer type or deposited wear-resistant layer, or glass). The recording of a hologram is effected using either opposed-beams, or the reference beam incident upon the layer of emulsion at the angle of 20 to 40 degrees and the object beam directed from the back side of the layer after having been reflected from the object being recorded.

The layer of emulsion in [1] performs attenuation of the light flux mainly due to the reflection from local reflection and absorption centres formed in the emulsion during hologram recording, and due to partial transparency of the material of the emulsion. Additional attenuation of the light in the protective layer gives an auxiliary possibility of changing transmittance of the lenses [1] within the required region.

The drawback of the known lenses [1] is that the hologram layer apart from its main function of forming the image performs an additional function of attenuating the transmitted radiation within the whole visible region of the spectrum. This does not allow to reduce the spatial modulation of this radiation without the simultaneous reduction in brightness and expressiveness of the holographic image, i.e., increasing attenuation reduces the brightness of this image, which becomes relatively obscure and blurred, thereby having lost expressiveness and making the glasses less attractive. The protective layer used has no spectral selectivity and over the spectrum homogeneously attenuates the radiation transmitted through the layer and because of that it cannot compensate for a spatial transmission inhomogeneity of a hologram layer resulting from forming a holographic image.

The closest to the applied for lenses are lenses for holographic spectacles according to PCT application WO 96/25686, G02C 7/10, 11/02, 22.08.96, [2] (prototype). These lenses comprise an optically transparent base having one of its surfaces provided with a layer having at least one three-dimensional hologram recorded therein and being made of material transparent in a spectral range wherein the hologram has maximum diffraction efficiency, and disposed behind said hologram layer (as viewed from the outside of the spectacles towards the user) is at least one compensation layer made of selectively absorbing material with a maximum spectral transmittance outside said spectral range and serving for reducing colour contrast over the lens aperture in transmitted light while increasing the brightness of a holographic image formed on illumination of the lenses.

The use of the compensation layer made of selectively absorbing material with said spectral characteristics enables one to overcome most of the drawbacks inherent to the analogue [1]. This occurs due to relative attenuation of those spectral components of the radiation transmitted through the layer, which are within a rather narrow spectral range corresponding to maximum diffraction efficiency of the hologram, i.e. just those components which are responsible for initiation of spatial modulation of the radiation perceived by the user's eye as colour spots. This results in reducing colour contrast between these spots over the aperture of the lenses, and, consequently, decreasing user discomfort.

At the same time, research of the author of the present invention have shown, that the implementation of the advantages of the structure of spectacles [2] associated with using the compensation layer made of selectively absorbing material meets with certain restrictions. This is related to the fact that spectral the characteristics of the compensation layer made of such a material are strictly fixed, while the maximum of diffraction efficiency of the hologram is shifted over the spectrum when the conditions of lens illumination (angle of incidence of reconstructing light) are changed. As the spectral range of light absorption (absorption band) by the compensation layer is rather narrow and associated in [2] with the width of the spectrum of a hologram diffraction efficiency, then such a shift of the latter spectrum caused by the change of the illumination angle disturbs compensation of the spatial transmission inhomogeneity of a hologram layer. In other words, the compensation layer decreases a spatial modulation of the light transmitted through the hologram layer in a limited angular range of incidence of the light reconstructing the hologram. This restricts the functional capabilities of the structure of known lenses [2] rather seriously taking into account a natural desire of the user of decorative and advertisement holographic spectacles to extend an angular range in which a holographic image can be observed.

### SUMMARY OF THE INVENTION

From the analysis conducted follows an object of the present invention consisting in setting and solving a task of reducing colour contrast over the lens aperture in the transmitted light, while extending an angular range in which a holographic image can be observed (extending an angular range of incidence of the light reconstructing the hologram). It is another object of the present invention to solve an additional task of retaining the brightness and expressiveness of the holographic image when such an extension of said angular range occurs.

The above tasks are solved by the present invention according to which, in lenses for holographic spectacles, comprising an optically transparent base having one of its surfaces provided with a layer wherein at least one three-dimensional hologram is recorded, and disposed behind said hologram layer (as viewed from the outside of the glasses towards the wearer) is at least one compensation layer selectively attenuating the transmitted radiation and serving for reducing colour contrast over the lens aperture in transmitted light, said compensation layer is made to selectively reflect radiation impinging thereon from a specified spatial angle and having wavelengths in one or more spectral ranges, including those wavelengths at which a relating three-dimensional hologram has maximum diffraction efficiency, and to transmit radiation outside said one or more spectral ranges.

Other variant of the solution of the above tasks according to the present invention consists in that, in lenses for holographic glasses, comprising an optically transparent base having one of its surfaces provided with a layer wherein at least one three-dimensional hologram is recorded, one or more holograms of mirror(s) is also recorded in said hologram layer, said holographic mirrors being made to selectively reflect radiation impinging thereon from a specified spatial angle and having wavelengths in one or more spectral ranges, including those wavelengths at which a relating three-dimensional hologram has maximum diffraction efficiency, into the area outside a spatial angle wherein a holographic image is formed, and to transmit radiation outside said one or more spectral ranges, providing therefore reducing colour contrast over the lens aperture in the transmitted light.

The essence of the present invention is based on using the properties of a three-dimensional hologram forming a three-dimensional diffraction structure in a layer of recording material. When illuminating the hologram layer with a broad-band radiation of a natural or artificial origin, maximum hologram diffraction efficiency is revealed in a corresponding rather narrow spectral range. When changing the illumination conditions (extending an angular range of incidence of reconstructing light), the maximum of hologram diffraction efficiency is shifted both within an angular range and over the spectrum. Thanks to the spectral selectivity of the reflecting type of compensation layer, there is provided a relative attenuation of those spectral components of the transmitted radiation which are inside said one or more spectral ranges including wavelengths at which a relating three-dimensional hologram has maximum diffraction efficiency, that is just those components which axe responsible for initiation of the spatial modulation of radiation perceived by the eye of the user (wearer) as colour spots.

As the research of the author has shown, a change of illumination angle causes a shift of the maximum of light reflection by the compensation layer over the spectrum in just the same direction as the shift of the maximum of diffraction efficiency of the hologram, although there is no complete correspondence both in the amount of shift and in the extent of deformation of spectral bands. This becomes more clear when the compensation layer is made as a layer of recording material in which one or more holograms of mirror(s) is recorded, said holograms (holographic mirrors) being made to be reflective in one or more specified spectral ranges. In this case for both the layers said shift has the same physical nature, and the differences are explained by different peculiar properties of recorded objects. Such a shift of spectral reflection bands of the compensation layer provides compensation by this layer of the spatial transmission inhomogeneity (caused by forming the holographic image) of the hologram layer having three-dimensional hologram in a wider angular range (spatial angle) of the reconstructing light incident on the lenses than in case of using the compensation layer made of selectively absorbing material (as in the prototype).

A conception proposed by the author that selective attenuation by the compensation layer is accomplished just by reflection, and not by absorption is based not only on using said property of the reflecting type of compensation layers, but also, to a greater extent - on selecting the width of spectral ranges in which the light is reflected by them. The width of the spectral ranges is specified depending on the width of the spatial angle of hologram illumination - the spatial angle of the light reconstructing the hologram in such a way, that said ranges 〈〈overlap〉〉 the corresponding diffraction maximums of the three-dimensional hologram (three-dimensional holograms) taking into account their shift when changing the illumination angle. Thus the functional capabilities of the structure of the applied for lenses turn out to be wider than that of the prototype, as the compensation of spatial inhomogeneity of the light transmitted through the hologram layer having three-dimensional hologram can be provided in a wider spatial angle of lens illumination and, consequently, in a wider angular range in which a holographic image can be observed. Thereby, colour contrast over the lens aperture is reduced in a wider angular range, enabling one to solve the task set.

It is necessary to point out one more important advantage of using the reflecting type of compensation layers: the selection of materials and technology for producing the layers having spectral ranges of required width and position turns out to be far easier for them then for compensation layers made of selectively absorbing material (as in the prototype). For the prototype such selection is practically unrealizable when using multicolour holograms having sharp changes in colour between separate elements of the image. By that, using in the prototype the compensation layer made of selectively absorbing material with broadened spectral absorption bands is not the way out of this situation, as this deteriorates sharply its compensation properties (loss of selectivity) for which it was introduced into the prototype.

It is an important peculiarity of the present invention, that for reducing spatial transmission inhomogeneity of the hologram layer having three-dimensional hologram realization is essential of the function of selective reflection having said spectral properties itself, and not an arrangement of elements of lens structure realizing this function. Thus, in the embodiment of the conception of the invention using one or more holograms of mirror(s) (holographic mirrors) for said one or more spectral ranges it turns out to be not essential if they are recorded in a separate compensation layer or in a hologram layer having at least one three-dimensional hologram already recorded therein. In that and other variants, a colour contrast over the aperture of lenses in the transmitted light is reduced and, consequently, the discomfort for the user is also reduced. When said holograms of mirrors are made to reflect radiation incident thereon from the specified spatial angle into the area outside a spatial angle wherein a holographic image is formed, then radiation reflected by them will not create for observers a background of the same colour as the holographic image, and thereby the best conditions for observation of the latter will be provided. This peculiarity certifies the unity of conception of the invention and demonstrates the possibility of using, depending on specific circumstances, that or other variants each enabling to retain the main advantages of the prototype - independent optimisation of elements of the lens structure and their properties.

Thus, the hologram layer having three-dimensional hologram can be made of material transparent in one or more spectral ranges including wavelengths at which a relating three-dimensional hologram has maximum diffraction efficiency. Such material can be, for example, a bleached silver halide photoemulsion, bichromated gelatine or a photopolymer. As, in this case, the radiation forming a holographic image is not absorbed by the material of the hologram layer having three-dimensional hologram, then it is possible to obtain a maximum possible brightness of the image, under all other conditions being equal. Moreover, the holographic image becomes in this case sharper (because of a better reproduction of details and shades of the recorded object), which makes it very expressive and attracts attention of surrounding people to the wearer of spectacles. Thus the solution of the additional task is provided.

Further capabilities of increasing the brightness of the holographic image are provided when not only the material itself used for recording a three-dimensional hologram but also the local centres created as a result of hologram recording and forming therein a three-dimensional diffraction structure do not absorb the radiation in said spectral ranges. Such centres (for example, local changes in the refractive index created in the layer of bichromated gelatine) differ in their optical properties (absence of absorption) from reflection and absorption centres formed In the materials like the photographic emulsion type used in [1].

It should be pointed out that the advantages described above in relation to both variants of the embodiment of the invention are reached irrespectively of the specific position of the hologram layer having three-dimensional hologram on the corresponding surface of the base and the way of joining it.

Said hologram layer having three-dimensional hologram can be located on the inner surface of the base, facing the user (the wearer), or on its outer surface with respect to the user and can be applied directly to the corresponding surface as if it were a substrate. The hologram layer having three-dimensional hologram can also be applied to a separate specially introduced substrate being made of optically transparent material and facing the user, and can be joined to the base by means of a layer of lens cement. Besides, the hologram layer having three-dimensional hologram can be hermetically sealed between the base and the last of the elements of the lens structure (its substrate or compensation layer for the corresponding variant) with the aid of a layer of hermetically binding material, for example, lens cement applied to the end faces of lenses.

Such freedom in the selection of the position and of the way of making the joint with other elements of the lens structure is available also in respect of the reflecting type of compensation layer for the corresponding variant of the invention, the only condition for this being that the compensation layer should be disposed behind the hologram layer having three-dimensional hologram (as viewed from the outside of the glasses towards the user (the wearer)). Such freedom enables one to optimize the structure of the lenses from the technological point of view or to solve diverse additional tasks as well as the tasks set.

Thus, the compensation layer can be applied to the inner surface of the base, facing the wearer, as if it were a substrate, if said hologram layer having three-dimensional hologram is located upon the outer surface of the base and is applied thereto as if it were a substrate. On the other band, said compensation layer can be applied to a specially introduced substrate being made of optically transparent material and facing the wearer, said substrate, for example, can be shaped as a plate or an eyesight correcting lens. In this case said hologram layer having three-dimensional hologram can be applied to said compensation layer as if it were a substrate and can be joined to the base by means of a layer of lens cement. Another situation is also possible where, on the contrary, said compensation layer is applied to the hologram layer having three-dimensional hologram as if it were a substrate, said hologram layer in turn being applied in a similar way to the inner surface of the base, facing the wearer.

Another possible solution of the task set is when the compensation layer is separated from the hologram layer by a layer of non-selectively absorbing material reducing homogeneously the optical transmission over the entire lens aperture. This allows one to decrease the requirements to the reflecting type of compensation layer, as in this case it can be made having lesser values of the reflection coefficient that is essential when, for example, it is made as an interference coating. It is also essential that this layer of non-selectively absorbing material is disposed behind the hologram layer having three-dimensional hologram (as viewed from the outside of the glasses towards the wearer), as in this case it does not deteriorate the brightness and expressiveness of the holographic image and can be used at the same time for protection against a bright light In the case when this additionally introduced layer is made of photochromic material capable of changing optical transmission over the entire lens aperture depending on the intensity of light illumination, then this will enable one to improve user adaptation to the conditions of abrupt and frequent changes in illumination, e.g., when changing over from light to shadow.

To some extent this additionally introduced layer in combination with the compensation layer can be simply considered as the form of realization of the latter. Other forms of realization of the compensation layer were considered above: it can be made as a layer of recording material in which one or more holograms of mirror(s) is recorded, said holograms (holographic mirrors) being made to be reflective in one or more specified spectral ranges, or as an interference coating. The variety of such examples certifies that the form of realization of this layer is not essential for the solution of task set.

Naturally, everything described above pertaining to the essence of the present invention relates equally to embodiments of the invention when using two or more holograms in lenses. This provides additional possibilities depending on the purpose of glasses (spectacles). So, when all of these holograms have maximum diffraction efficiency in one and the same spectral range, then they can be recorded at different angles of incidence of the reference beam lying in sequentially arranged angular intervals covering an assigned angular range, for example, from 40.5 to 80 degrees with respect to the normal to the lens surface. This feature extends the demonstration capabilities of present lenses, as it allows demonstrating to the observer the changes in one and the same holographic image in motion, attracting increased attention thereto. Although in this case it is enough to have one compensation layer, however, it is possible to apply more then one such layer, for example, in order to minimize colour contrast over the lens aperture. It is quite understandable that both the angular range and the order of recording holograms therein may vary depending on the required decorative or advertising effect.

In order to obtain a multicolour holographic image of the object at least two of holograms of its individual fragments should have maximum diffraction efficiency in different spectral ranges, but they maybe recorded in one and the same angular range (for example, in opposed-beams). In relation to this it may turn out to be more preferable according to technological reasons to use two or more compensation layers rather then a single one for reducing colour contrast over the aperture of lenses in corresponding spectral ranges. On the other hand, holograms of the object or its individual fragments in some spectral ranges can be recorded into separate layers, which, in particular, simplifies the technology of recording. In this case it turns out to be expedient that the lenses be provided with one or more additional layers each having at least one three-dimensional hologram recorded therein, said additional layers being located sequentially either on one and the same of the surfaces of the base together with said hologram layer having three-dimensional hologram, or on the other surface of the base with respect to said hologram layer having three-dimensional hologram. It should be pointed out that in both variants said one or more compensation layers is disposed behind the last of such layers having three-dimensional hologram (as viewed from the outside of the glasses towards the wearer). For example, when all layers having three-dimensional holograms are applied to the outer surface of the base, then all said compensation layers can be applied to the inner surface of the base with respect to the wearer.

The analysis of the essence of the invention and its various embodiments confirms that the selection of common essential features describing the present lenses for holographic glasses is well-grounded, and the presence among them of the distinctive features certifies the correspondence of the present invention to the condition of patentability regarding the novelty.

It follows from the analysis of the state of the art that said task itself has been set by the author for the first time, and its solution turns out to be non-traditional in this field of technique. This may be confirmed by, for example, the fact that such a distinctive feature as said compensation layer having said optical properties and purpose has not been used in the analogues known to the author in the field relating to the holographic glasses (spectacles). Only further researches by the author have shown that making the compensation layer to be selectively reflective provides definite advantages as compared with using the selectively absorbing one (see the prototype) in the case when adequate extension of spectral ranges in width beyond the values determined by the maximums of diffraction efficiency of holograms is present The specific values (widths) of such ranges are determined depending on the spatial angle of the light reconstructing the hologram(s) in which observation of the holographic image is desirable. This allows one to make a conclusion that the present invention corresponds to the condition of patentability regarding the inventive step.

The advantage of the present invention is the fact that practically all the advantages of the prototype are retained. In particular, the invention allows one to carry out a wide variation of the properties and forms of realization of different elements of lens structure or their combination while retaining in this case the possibility of solving the task set, thereby enabling one to select the most optimal technological approach and structural arrangement. Such possibilities were already mentioned above in relation to the hologram layer having three-dimensional hologram and to the reflecting type of compensation layer. In addition, it should be pointed out that an optically transparent base may be made of a polymer material used in making lenses of conventional non-holographic glasses (spectacles), or from soda-lime glass. In this case the base can be shaped as a plate or made in other form, for example, of an eyesight correcting lens. The latter provides certain conveniences for users having deviations of sight from the norm. For such users it is possible to have another arrangement when the base has, for example, the form of a flat plate, while shaped as an eyesight correcting lens is the substrate of the compensation layer (or the substrate of the hologram layer having three-dimensional hologram for another embodiment of the invention) which faces the wearer and is made of optically transparent material. In a number of cases (so as in the prototype) the hologram layer having three-dimensional hologram may be applied to the substrate (or to the compensation layer which has its substrate) and joined to the base by means of a layer of lens cement. A single structure formed thereby has certain advantages. The hologram layer therein turns out to be isolated from the environment, which essentially decreases the rate of degradation of the properties of this layer and allows to extend the period during which the brightness and expressiveness of holographic image is retained. On the other hand, from mechanical standpoint this structure is similar to that of 〈〈triplex, i.e., when damaged, for example, due to the sharp impact the lenses are liable only to crack rather than to break into separate pieces, which raises the safety of the user's eyes.

### BRIEF DESCRIPTION OF THE DRAWINGS

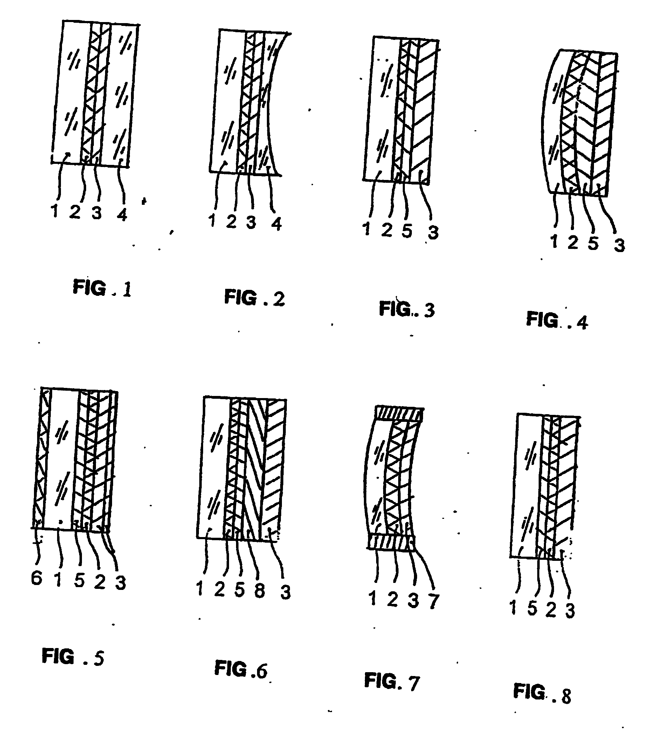

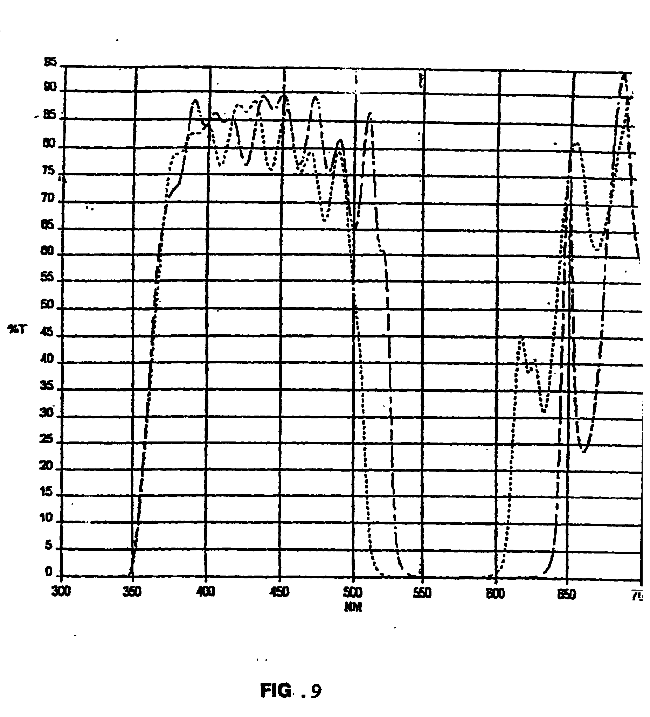

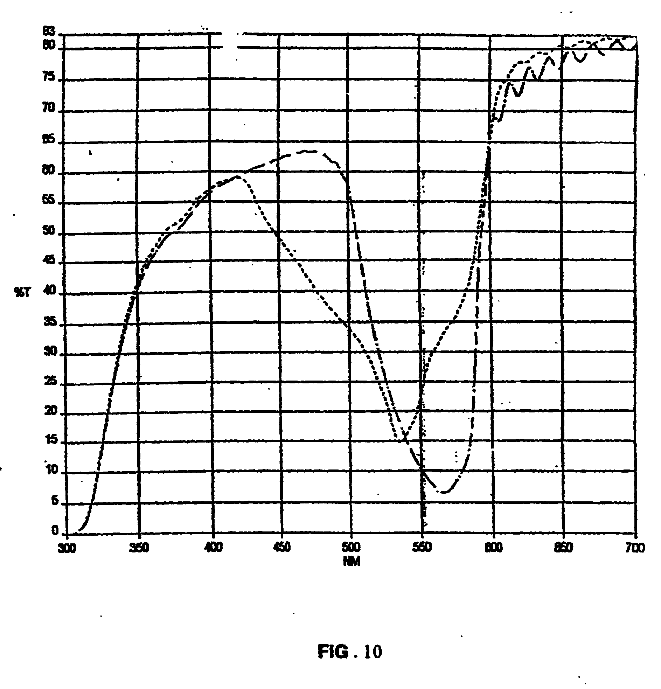

The embodiments of the invention described above and others are illustrated in FIGS. 1-8, wherein the cross-sectional views of applied for lenses for holographic glasses are shown with the use of the following designations of the elements of the structure: 1 - base; 2 - hologram layer having three-dimensional hologram; 3 - (selectively) reflecting type of compensation layer; 4 - substrate of the compensation layer; 5 - layer of lens cement; 6 - additional layer having three-dimensional hologram; 7-hermetically sealing layer; 8- a layer of non-selectively absorbing material. FIG. 9 and FIG. 10 show the recording of the transmission spectra of the hologram layer having three-dimensional hologram of the test object (FIG. 10) and selectively reflecting type of compensation layer (FIG. 9).

### DETAILED DESCRIPTION OF THE PREFERRED EMBODIMENTS

Lenses for holographic glasses (FIG. 1) comprise an optically transparent base 1 made of soda-lime glass and shaped as a 1.3 mm thick plate having its inner surface, facing the user, provided with a layer 2, which is applied thereto as if it were a substrate and made of photorecording material - bichromated gelatine (having a thickness in the layer of the order of 10 microns) wherein a three-dimensional hologram is recorded. In this embodiment of the invention disposed behind the layer 2 (as viewed from the outside of the glasses towards the wearer) is a selectively reflecting type of compensation layer 3, which is applied to a substrate of optically transparent material 4, facing the user (the wearer) and being made as a flat plate. The compensation layer 3 is made as a layer of recording material, in which a hologram of a mirror (a holographic mirror) is recorded to be reflective in a specified spectral range.

FIG. 2 illustrates another variant of the above embodiment of the invention the only difference of which with the one shown in FIG. 1 is that the substrate 4 of the compensation layer is shaped as an eyesight correcting lens.

According to another embodiment of the invention shown in FIG. 3, the compensation layer 3 has no substrate, in contrast to the one shown in FIG. 1, and is joined to the hologram layer 2 having three-dimensional hologram by means of a layer 5 of lens cement.

The base 1 in the embodiment of FIG. 4 is shaped as an eyesight correcting lens. In the remaining aspects it is similar to the embodiment shown in FIG. 3.

In the variants of further embodiment of the invention shown in FIG. 5 and FIG. 8, the hologram layer 2 having three-dimensional hologram is applied, in contrast to all the other embodiments, to the compensation layer 3, as if it were a substrate, and joined to the base 1 by means of a layer 5 of lens cement. The outer surface of the base 1 (FIG. 5) is provided with an additional layer 6 having three-dimensional hologram, while the inner surface, facing the user, of the compensation layer 3 is provided with the second compensation layer 3 applied thereto for decreasing spatial modulation of the light transmitted through this additional layer 6.

FIG. 6 shows another variant of the embodiment of the invention which is different from the one shown in FIG. 3 only in that the compensation layer 3 is separated from the hologram layer 2 by a layer 8 of non-selectively absorbing material reducing optical transmission homogeneously over the the entire lens aperture.

The base 1 in FIG. 7 is shaped as a curved plate and has its inner surface provided with the hologram layer 2 which is applied thereto as if it were a substrate, while the compensation layer 3 is applied to the hologram layer 2 as if the latter were a substrate. The lens cement layer 7 applied to the end faces of these elements isolates the layer 2, thereby decreasing the rate of degradation of its properties.

The assembled lenses are trimmed and turned to suit the shape of the aperture of the glasses frame and then are mounted into an appropriate frame. Thus, the lenses are ready for use.

For checking the possibility of carrying out the compensation of spatial modulation of the light transmitted through the hologram layer when extending an angular range of incidence of the light reconstructing the hologram, an experiment was made, the essence of which consisted in the following.

A hologram of the test object was recorded into the photo-recording medium (a layer of bichromated gelatine about 10 microns thick coated onto a glass plate (a substrate)) at the wavelength of 514 nm. The angle of incidence of the reference beam with a flat wavefront to the surface of this photoplate was equal to the Bragg angle (in order to exclude undesirable re-reflections of the light by the photoplate surfaces). The recording was made according to the known scheme: the illumination of the object occurred at the expense of the reference beam portion transmitted through the photoplate. A set of mirrors reflecting at different angles within the range of 30 degrees (the greater range is not covered by the eye of the person observing through the hologram mounted into the glasses frame) was used as a test object. In hologram recording the use of such a 〈〈mirror〉〉 object makes the greatest distortions of 〈〈white〉〉 light transmitted through the hologram in the form of a spatial modulation appearing to have a significant colour contrast when observing through the hologram. The holograms obtained bad a diffraction efficiency of over 50%. With a help of a spectrophotometer the spectral characteristics of transmission (reflection) of such holograms were obtained when they were being illuminated at different angles. Thus, at the normal incidence of the reconstructing beam the maximum of reflection (minimum of transmission T) occurred at the wavelength 565 nm (see dash-dotted line in FIG. 10) and had the bandwidth at half maximum equal to 70 nm. While increasing the angle of incidence of the reconstructing beam (changing the observation angle) up to 30 degrees with respect to the normal, the maximum of reflection is shifted approximately 35 nm to the shorter wavelengths (dashed line in FIG. 10), and consequently, the colour of the transmitted light is changed. Thus, recording the hologram of a mirror object (holographic mirror) results in forming a well-defined spectral band within which the transmission is much less than that outside this spectral band, i.e. the appearance of colour contrast. For providing compensation of spatial modulation, specially made compensation layers were used for these purposes in the form of multilayer dielectric interference mirrors to selectively reflect the radiation incident thereon from an angular range of 30 degrees wide with respect to the normal into the area outside the spatial angle wherein a holographic image is formed.

Spectral transmission of such mirrors (FIG. 9) was formed in such a way that the band (or bands) with a minimum transmission (a maximum reflection close to 100%) overlapped a corresponding spectral band of hologram diffraction efficiency, and so the maximum of the band occurred at the wavelength of 570 nm having the bandwidth of about 100 nm and reflection coefficient of more than 95%. When changing the angle of incidence of the reconstructing beam of light up to 30 degrees, the band having practically the same width was shifted 25 nm in just the same direction as the shift of the maximum of reflection (the minimum of transmission) of the hologram layer. So, overlapping the spectral reflection band (the band of diffraction efficiency) of the hologram by the spectral band of the compensation layer was provided in the required angular range and because of that the effective compensation of said modulation took place: colour spots that could be perceived by the eye were absent in the aperture of lenses when observing simultaneously through the hologram and the corresponding compensation layer. Similar experiments were made while hologram recording at other wavelengths and for other angular ranges of reconstructing beams and using compensation layers made holographically as well.

The applied for lenses for holographic glasses function in the following way. Natural or artificial radiation is incident on base 1 and while transmitting therethrough is diffracted without absorption on a hologram recorded in the volume of layer 2. The radiation scattered by this hologram forms a bright holographic image (for example, that of a bat) within a narrow spectral range in the green region of the visible spectrum (see FIG. 10), which an observer sees in the aperture of both lenses of the glasses. The radiation in this spectral range that has transmitted through the layer 2 is reflected to the greatest extent by compensation layer 3. The radiation outside the spectral range of layer 3 in the rest of the visible spectrum (see FIG. 9) is reflected by layer 3 to a lesser extent and the user can observe surroundings through the lenses in purple-brown shades without interfering colour spots resulting from spatial modulation of radiation which would be seen in the absence of the layer 3.

It should be pointed out that the examples and different variants of embodiments of the invention described herein are not exhaustive. But at the same time they cannot be considered as limiting the present invention. They are, as it was already mentioned, only illustrations allowing to understand better its essence which is described to a greater extent most fully described in the claims of the present invention.

### INDUSTRIAL APPLICABILITY

The invention can be used in manufacturing sun glasses, decorative, advertisement or club - house spectacles. In carrying into effect all the embodiments described above use is made of known elements, materials and substances which production is carried out on industrial scale. Techniques of applying layers to various substrates, as well as hologram recording techniques are a matter of knowledge to those skilled in the respective fields of engineering and technology.

## Claims

1. Lenses for holographic glasses, comprising an optically transparent base having one of its surfaces provided with a layer in which at least one three-dimensional hologram is recorded, and disposed behind said hologram layer (as viewed from the outside of the glasses towards the wearer) is at least one compensation layer selectively attenuating the transmitted radiation and serving for reducing colour contrast over the lens aperture in transmitted light, wherein said compensation layer is made to selectively reflect radiation impinging thereon from a specified spatial angle and having wavelengths in one or more spectral ranges, including those wavelengths at which a relating three-dimensional hologram has maximum diffraction efficiency, and to transmit radiation outside said one or more spectral ranges.

2. Lenses for holographic glasses of claim 1, wherein the base is shaped as a plate or an eyesight correcting lens.

3. Lenses for holographic glasses of claim 1, wherein the hologram layer is made of material transparent in said one or more spectral ranges.

4. Lenses for holographic glasses of claim 1, wherein said hologram layer is located on the inner surface of the base, facing the wearer, and is applied thereto as if it were a substrate.

5. Lenses for holographic glasses of claim 4, wherein said compensation layer is applied to the hologram layer as if it were a substrate.

6. Lenses for holographic glasses of claim 1, wherein said compensation layer is applied to the inner surface of the base, facing the wearer, as if it were a substrate, and said hologram layer is located on the outer surface of the base and is applied thereto as if it were a substrate.

7. Lenses for holographic glasses of claim 1, wherein said compensation layer has a substrate and is applied thereto, said substrate being made of optically transparent material and facing the wearer.

8. Lenses for holographic glasses of claim 7, wherein the substrate of the compensation layer is shaped as a plate or an eyesight correcting lens.

9. Lenses for holographic glasses of claims 7 and 8, wherein said hologram layer is applied to said compensation layer as if it were a substrate and joined to the base by means of a layer of lens cement

10. Lenses for holographic glasses of claim 1, wherein said hologram layer is hermetically sealed between the base and the compensation layer with the aid of a layer of hermetically binding material, for example, lens cement applied to the end faces of the lenses.

11. Lenses for holographic glasses of claim 1, wherein said compensation layer is made as a layer of recording material in which one or more holograms of mirror(s) is recorded, said holographic mirrors being made to be reflective in said one or more spectral ranges.

12. Lenses for holographic glasses of claim 11, wherein said holograms of mirrors are made to reflect radiation incident thereon from the specified spatial angle into the area outside a spatial angle wherein a holographic image is formed.

13. Lenses for holographic glasses of claim 1, wherein said compensation layer is made as an interference coaling.

14. Lenses for holographic glasses of claim 1, wherein they comprise one or more additional layers each having at least one three-dimensional hologram recorded therein, said additional layers being located sequentially with said hologram layer, and said one or more compensation layers is disposed behind the last of such additional layers (as viewed from the outside of the glasses towards the wearer).

15. Lenses for holographic glasses of claim 1, wherein they comprise one or more additional layers each having at least one three-dimensional hologram recorded therein, said additional layers being located sequentially on other surface of the base with respect to said hologram layer, and said one or more compensation layers is disposed behind the last of such additional layers (as viewed from the outside of the glasses towards the wearer).

16. Lenses for holographic glasses of claim 1, wherein when using two or more holograms they are recorded to have maximum diffraction efficiency in the same spectral range.

17. Lenses for holographic glasses of claim 1, wherein when using two or more holograms at least two of them are recorded to have maximum diffraction efficiency in different spectral ranges.

18. Lenses for holographic glasses of claim 1, wherein the compensation layer is separated from the hologram layer by a layer of non-selectively absorbing material reducing homogeneously optical transmission over the entire lens aperture.

19. Lenses for holographic glasses of claim 1, wherein the compensation layer is separated from the hologram layer by a layer of photochromic material capable of changing optical transmission over the entire lens aperture depending on the intensity of light illumination.

20. Lenses for holographic glasses, comprising an optically transparent base having one of its surfaces provided with a layer in which at least one three-dimensional hologram is recorded, wherein one or more holograms of mirror(s) is also recorded in said hologram layer, said holographic mirrors being made to selectively reflect radiation impinging thereon from a specified spatial angle and having wavelengths in one or more spectral ranges, including those wavelengths at which a relating three-dimensional hologram has maximum diffraction efficiency, into the area outside a spatial angle wherein a holographic image is formed, and to transmit radiation outside said one or more spectral ranges, therefore reducing colour contrast over the lens aperture in the transmitted light.

21. Lenses for holographic glasses of claim 20, wherein the base is shaped as a plate or an eyesight correcting lens.

22. Lenses for holographic glasses of claim 20, wherein the hologram layer is made of material transparent in said one or more spectral ranges.

23. Lenses for holographic glasses of claim 20, wherein said hologram layer is located on the inner surface of the base, facing the wearer, and is applied thereto as if it were a substrate.

24. Lenses for holographic glasses of claim 20, wherein said hologram layer is located on the outer surface of the base with respect to the wearer and is applied thereto as if it were a substrate.

25. Lenses for holographic glasses of claim 20, wherein said hologram layer has a substrate being made of an optical transparent material and facing the wearer.

26. Lenses for holographic glasses of claim 25, wherein the substrate of the hologram layer is shaped as a plate or eyesight corrective lens.

27. Lenses for holographic glasses of claim 25, wherein said hologram layer is joined to the base by means of a layer of lens cement.

28. Lenses for holographic glasses of claim 25, wherein said hologram layer is hermetically sealed between its substrate and the base with the aid of a layer of hermetically binding material, for example, lens cement applied to the end faces of the lenses.

29. Lenses for holographic glasses of claim 20, wherein when using two or more three-dimensional holograms they are recorded to have maximum diffraction efficiency in the same spectral range.

30. Lenses for holographic glasses of claim 20, wherein when using two or more three-dimensional holograms at least two of them are recorded to have maximum diffraction efficiency in different spectral ranges.
